# FASCICULE DE BREVET EUROPEEN

(11) **EP 1 679 951 B1**
(45) Date de publication et mention de la délivrance du brevet: **21.01.2009**
(21) Numéro de dépôt: 04787176.9
(22) Date de dépôt: 20.09.2004
(51) Int. Cl.: A01G 9/02

(54) **STRUCTURE MODULAIRE POUR L'AMENAGEMENT D'UNE PAROI SENSIBLEMENT VERTICALE D'UN BATI, POUR LA RECEPTION DE VEGETAUX D'ORNEMENT**
ZUR EINRICHTUNG EINER IM WESENTLICHEN VERTIKALEN WAND EINES BAUELEMENTS VERWENDETE MODULARE STRUKTUR, DIE ZUR UNTERBRINGUNG VON ZIERPFLANZEN VERWENDET WIRD
MODULAR STRUCTURE WHICH IS USED TO FIT OUT AN ESSENTIALLY-VERTICAL WALL OF A BUILDING ELEMENT AND WHICH IS USED TO HOUSE ORNAMENTAL PLANTS

(30) Priorité: 18.09.2003 FR 0310945
(43) Date de publication de la demande: 19.07.2006
(73) Titulaire: Greenwall SAS, 30319 Alès Cedex (FR)
(72) Inventeur: DAURES, Jean-François, F-34000 Montpellier (FR)
(74) Mandataire: Ravina, Bernard
(86) Numéro de dépôt international: PCT/EP2004/052247
(87) Numéro de publication internationale: WO 2005/025296

(56) Documents cités:
- WO-A-88/06400
- DE-A- 19 531 647
- FR-A- 2 747 265
- GB-A- 2 239 155
- US-A- 4 295 296
- US-A- 5 099 606
- US-A1- 2002 104 264

## Description

La présente invention est du domaine des travaux de finition du bâtiment, et plus particulièrement de l'aménagement d'une paroi d'un bâti pour la réception de végétaux d'ornement. Elle a pour objet une structure modulaire pour l'aménagement d'une paroi d'un bâti dont les modules forment des récipients individuels pour la culture de végétaux.

On rappelle qu'il est connu d'aménager une paroi d'un bâti, tel qu'une paroi extérieure ou intérieure d'un bâtiment, un mur de soutènement d'un ouvrage du génie civil ou encore un mur anti-bruit par exemple, en disposant un écran végétal contre la paroi pour masquer cette dernière et conférer au bâti un aspect extérieur particulier. Un tel écran végétal est principalement constitué d'une structure agencée en modules de réception d'un substrat pour le développement de végétaux, lesdits modules étant équipés de moyens de fixation contre la paroi.

Une difficulté générale à surmonter dans le domaine réside dans une organisation des modules qui permette une retenue efficace et pérenne du substrat, tout en offrant aux végétaux un volume satisfaisant de développement vers l'extérieur des modules, pour optimiser la formation de l'écran végétal et donc l'aspect extérieur recherché.

Plus particulièrement, il est souhaitable que les modules soient organisés pour autoriser leur implantation sur une paroi relativement quelconque, quelle que soit l'étendue et la conformation de cette dernière, celle-ci pouvant en outre être plane ou présenter des zones d'inflexion, voire présenter une modénature relativement quelconque. Il en ressort que la structure modulaire doit être adaptable à une quelconque paroi à habiller, sans pour autant porter atteinte à la faculté de développement des végétaux.

Il est aussi apparu souhaitable que les modules soient organisés pour autoriser une conformation de l'écran végétal la plus quelconque possible, au regard d'une libre créativité désirée d'un concepteur. En outre, il est souhaitable que les modules soient les plus légers possibles en raison de leur soutien par la paroi en station sensiblement verticale, et en vue de faciliter leur manutention, sans que leur légèreté ne porte atteinte ni à leur solidité, ni à leur fiabilité, ni encore à leur faculté de réception d'une quantité la plus volumineuse possible de substrat.

Par ailleurs, il est souhaitable d'équiper la dite structure modulaire d'un réseau d'irrigation du substrat en liquide d'irrigation préférentiellement fertilisant, et en conséquence le cas échéant, de moyens d'isolation de la paroi à l'encontre d'une humidité en provenance du substrat irrigué.

Par ailleurs encore, il est apparu souhaitable que les modules soient organisés de manière à favoriser la pérennité du développement des végétaux, en limitant les interventions de maintenance.

Pour connaître un environnement technologique proche de la présente invention, on pourra se reporter aux documents FR2747265 (BLANC, DESCHAMPS, JAILLOUX) et WO88/06400 (MIELKE) qui proposent de telles structures modulaires pour la formation d'un écran végétal.

Le but de la présente invention est de proposer une structure modulaire qui réponde aux difficultés, contraintes et objectifs susvisés.

La structure modulaire de la présente invention est destinée à l'aménagement d'une paroi sensiblement verticale et/ou inclinée d'un bâti pour la réception de végétaux d'ornement. Cette structure modulaire comprend une pluralité de modules de réception d'un substrat pour le développement des végétaux, et des moyens de mise en relation desdits modules avec une paroi du bâti, en vue de la formation d'un écran végétal masquant cette dernière. En outre, cette structure modulaire est associée à un réseau d'irrigation du substrat en relation avec une source d'alimentation en liquide, eau notamment.

On peut citer également la demande de brevet GB 2 239 155. Ce document décrit des compartiments superposés recevant un milieu de culture destinés à habiller un mur vertical pour apporter une touche esthétique et réduire les nuisances sonores. Chaque compartiment qui est réalisé en un matériau rigide imputrescible et léger tel que l'aluminium ou une matière plastique, est doté d'une paroi arrière venant au contact du mur à habiller, et d'une paroi frontale percée d'ouvertures par lesquelles les plantes peuvent se développer.

Les modules composant la structure sont chacun principalement agencés en un cadre comportant dans son plan une cloison de séparation étanche divisant le volume délimité par le cadre en un débouché arrière constituant un moyen d'isolation apte à contenir un matériau isolant et un débouché frontal, ce dernier étant équipé d'un organe ajouré de retenue du substrat, qui est reçu à l'intérieur du volume délimité par le cadre.

Les moyens de mise en relation des modules avec la paroi du bâti sont avantageusement organisés pour un maintien des cadres en adjacence latérale dans leur plan général, parallèlement à la paroi du bâti, de sorte que le débouché des modules hors duquel émergent les végétaux, correspondant au débouché frontal de leur cadre, soit disposé sensiblement parallèlement à la paroi du bâti.

Grâce à ces dispositions et pour un encombrement de façade du module donné, l'écran végétal formé est de dimensions optimales. En outre, les bords des cadres sont susceptibles d'être exploités pour la réception de conduites d'arrosage en relation avec le circuit d'irrigation, et/ou d'autre part pour la fixation, non seulement sur le module de l'organe de retenue, de la cloison de fermeture, voire d'une couche d'isolation phonique et/ou thermique, mais aussi pour la fixation du module sur la paroi du bâti tel qu'il sera décrit plus loin.

On comprendra par cadre un élément dont le pourtour est refermé sur lui-même pour délimiter le volume de réception du substrat, ledit cadre étant indifféremment agencé selon une conformation polygonale, carré notamment, ou une conformation circulaire.

Selon une première forme de réalisation, le module est formé par assemblage d'une pluralité d'éléments, dont des profilés aboutés constituant les côtés du cadre, qui sont équipés de moyens de liaison au moins avec la cloison de séparation et avec l'organe ajouré de retenue.

Selon une deuxième forme de réalisation, le module comprend un caisson monobloc composé au moins du cadre et de la cloison de séparation, voire aussi de l'organe de retenue, le dit caisson étant

Selon une deuxième forme de réalisation, le module comprend un caisson monobloc composé au moins du cadre et de la cloison de séparation, voire aussi de l'organe de retenue, le dit caisson étant formé par moulage notamment, et étant, le cas échéant, équipé de moyens de liaison au moins avec l'organe de retenue.

Selon une forme préférée de réalisation de l'organe de retenue, celui-ci est principalement constitué d'un élément maillé ou de manière analogue d'un élément plein régulièrement ajouré ou équivalent. Cet élément maillé constitue en outre un moyen de protection des modules à l'encontre d'actes de vandalisme.

L'élément maillé est accessoirement associé à une nappe textile, tel que feutre ou analogue, de protection de l'appareil racinaire des végétaux, notamment dans le cas où le substrat est reçu en vrac à l'intérieur du cadre. Cette nappe textile est plus particulièrement interposée entre l'élément maillé et le substrat pour retenir ce dernier, réservé à l'ancrage de l'appareil racinaire des végétaux, sans faire obstacle à l'émergence des végétaux à son travers.

Ledit élément maillé est par exemple un treillis métallique ou analogue rapporté au débouché frontal du cadre, ou encore est formé conjointement avec le cadre lorsque celui-ci est obtenu par moulage d'un matériau plastique par exemple, tel que polystyrène, PVC, ou d'un matériau composite tel que résine chargée, béton préférentiellement allégé ou analogue.

Les moyens de fixation de l'organe ajouré de retenue sont par exemple constitués par des moyens de fixation de celui-ci contre les bords frontaux des côtés du cadre. Cependant il est avantageusement mis à profit la formation des côtés du cadre à partir d'un profilé pour ménager dans la tranche interne de ces derniers des gorges de réception par emboîtement de l'organe de retenue, les dites gorges étant, le cas échéant, indifféremment des gorges de réception commune de la nappe textile et de l'élément maillé ou des gorges individuelles de réception respective de l'un et de l'autre de la nappe textile et de l'élément maillé.

L'association entre l'élément maillé et la nappe textile procure l'avantage d'une combinaison des caractères rigide, léger et ajouré de l'élément maillé et des caractères dense, léger et transperçable de la nappe textile, pour constituer ensemble un organe de retenue du substrat globalement fiable et néanmoins léger, apte à habiller la quasi-totalité de la face frontale du cadre, et ne nécessitant pas d'opérations de maintenance régulière au regard de la croissance des végétaux. En outre, l'organe de retenue est préférentiellement fixé sur le cadre pour son amovibilité, l'organe de retenue étant fixé au cadre postérieurement à la mise en place du substrat dans son volume intérieur, et étant susceptible de permettre un accès au substrat lors d'une intervention de maintenance des végétaux.

La cloison de séparation est préférentiellement équipée d'une pluralité d'éléments rigides de cloisonnement du volume intérieur du cadre. Ces éléments de cloisonnement sont notamment monoblocs avec la cloison de séparation, en étant formé par moulage conjoint ou encore par pliage par exemple. Selon d'autres variantes, ces éléments de cloisonnement sont rapportés sur et/ou contre la cloison de séparation, ou encore sont contenus conjointement avec le substrat à l'intérieur d'un conteneur perméable, tel qu'un sac en matière plastique perméable rapporté à l'intérieur du cadre.

On comprendra en cela que selon diverses variantes, le substrat est conditionné à l'intérieur du volume du cadre indifféremment soit en vrac, soit à l'intérieur d'au moins un conteneur perméable, notamment agencé en une enveloppe perforée en matière plastique ou analogue. On notera que selon cette dernière variante, l'organe de retenue est susceptible d'être limité à l'élément maillé, l'enveloppe du conteneur protégeant l'appareil racinaire des végétaux à l'instar du feutre de protection susvisé.

On notera que la variante de réalisation selon laquelle le substrat est conditionné pour un même cadre à l'intérieur d'au moins un conteneur perméable, le substrat peut avantageusement être de nature et/ou de composition adaptée à la réception de végétaux respectifs nécessitant un substrat spécifique. Ces dispositions autorisent pour un même cadre une diversité de végétaux.

Les éléments de cloisonnement constituent avantageusement des moyens de rigidification de la cloison de séparation, et/ou des organes de rétention du liquide d'irrigation dans la zone arrière du substrat. Plus particulièrement, les éléments de cloisonnement sont préférentiellement discontinus, en étant par exemple formés d'une pluralité d'éléments de cloisonnement disposés en quinconce. Un tel cloisonnement s'étend notamment sur une partie de l'épaisseur du cadre, pour d'une part constituer des zones de rétention du liquide d'irrigation en fond du cadre et d'autre part autoriser le passage de l'humidité à travers la globalité du volume du substrat.

Les côtés du cadre sont de préférence équipés de moyens de réception d'une couche d'isolation phonique et thermique disposée à l'arrière de la cloison de séparation, notamment au voisinage du débouché arrière du cadre. On notera que la couche d'isolation phonique est préférentiellement de forte densité pour répondre à la loi acoustique de masse-ressort-masse et est continue à l'intérieur de chacun des cadres.

On notera qu'un espace de ventilation est préférentiellement ménagé entre la cloison de séparation et la paroi du bâti, voire le cas échéant entre la cloison de séparation et la couche d'isolation phonique et thermique. On notera aussi qu'une ouverture est préférentiellement ménagée dans chaque cadre pour le passage de l'un à l'autre des cadres d'une lame d'air ventilée, susceptible de participer de l'isolation acoustique du bâtiment.

Selon une première variante de réalisation des moyens de mise en relation des modules avec la paroi du bâti, les côtés du cadre sont équipés de moyens de réception d'une paroi de parement, constituant ladite paroi du bâti. On comprendra que les moyens de réception de la paroi de parement constituent lesdits moyens de mise en relation des modules avec la paroi du bâti.

Plus particulièrement selon cette variante de réalisation des moyens de mise en relation des modules avec la paroi, ceux-ci sont constitués par une participation des cadres à la formation de la paroi et par des moyens de fixation des modules entre eux. Dans ce cas, chacun des cadres comporte préférentiellement au voisinage de leur débouché arrière une plaque de parement conférant à la paroi sa continuité apparente.

Les plaques de parement sont notamment individuellement supportées soit par un prolongement vers l'arrière du cadre de réception du substrat, soit par l'intermédiaire d'un cadre élémentaire arrière, qui est fixé en superposition et en prolongement de l'un quelconque d'un cadre élémentaire rigide porteur de la couche d'isolation ou du cadre, frontal, de réception du substrat selon les variantes correspondantes de réalisation.

Selon une deuxième variante de réalisation des moyens de mise en relation des modules avec la paroi du bâti, ceux-ci sont par exemple des moyens de fixation des cadres sur la paroi, tel que par boulonnage et/ou crochetage ou analogue, éventuellement par l'intermédiaire d'un cadre élémentaire porteur et/ou d'une structure porteuse rapportée sur la paroi du bâti.

Plus particulièrement et selon divers exemples de réalisation de ces moyens de fixation, ceux-ci comprennent une armature de fixation noyée dans les bords du cadre ou dans la paroi de fond en cas de réalisation par moulage, ou par des organes de fixations, tels que vis, crochets ou analogues, en prise conjointe sur les modules et sur la paroi du bâti, cette dernière étant éventuellement porteuse d'une structure de fixation.

On notera globalement concernant les moyens de réception de l'une quelconque au moins de la couche d'isolation, de la cloison de séparation et de la paroi de parement, que ces moyens de réception sont indifféremment constitués isolément ou en combinaison, soit par des éléments porteurs notamment conformés en cadres élémentaires et rapportés en superposition et en prolongement sur le cadre de réception du substrat, soit par des reliefs d'emboîtement ménagés dans les bords du cadre, et notamment par des gorges ménagées dans sa tranche.

Par exemple, la couche d'isolation phonique et thermique, et le cas échéant la paroi de parement, voire encore la cloison de séparation, sont avantageusement rapportées sur le cadre par emboîtement à l'intérieur d'au moins une gorge, notamment respective, qui est ménagée dans la tranche interne des côtés du cadre.

Par exemple encore, le cadre est composé d'au moins un cadre élémentaire rigide pour la mise en relation du module avec la paroi, qui supporte en superposition un cadre élémentaire frontal de réception du substrat.

Selon une forme particulière de réalisation, le cadre élémentaire frontal est réalisé à partir d'un profilé en matériau souple et déformable, caoutchouc notamment, pour conférer au cadre une conformation relativement quelconque, tandis que le cadre élémentaire rigide est réalisé à partir d'un profilé en matériau rigide, matériau métallique ou matériau plastique notamment.

On notera qu'une gaine technique accessoire est susceptible d'être avantageusement ménagée dans l'un quelconque au moins des côtés du cadre.

Selon une forme de réalisation du réseau d'irrigation, celui-ci comprend des canaux d'irrigation associant des canaux externes d'acheminement du liquide depuis ladite source d'alimentation en liquide vers les modules, et des canaux internes. Ce liquide est préférentiellement une solution fertilisante et/ou de traitement phytosanitaire. Les canaux internes s'étendent avantageusement à l'intérieur ou en bordure de l'un au moins des côtés du cadre, qui comportent des dégagements pour leur réception. Dans le cas où les canaux internes sont logés, voire de manière analogue ménagés à l'intérieur d'un bord au moins du cadre, ceux-ci sont en communication avec le substrat par l'intermédiaire d'orifices d'irrigation ménagés à travers les côtés du cadre.

Selon une variante de réalisation, les canaux internes sont mis en communication avec l'un quelconque d'un canal externe et d'un canal interne d'un cadre voisin par l'intermédiaire de raccords, raccords auto perçant notamment, qui traversent les côtés du cadre. On relèvera que lesdits raccords sont susceptibles d'être utilisés tant pour le raccordement des cadres au réseau d'irrigation que pour le raccordement des cadres entre eux.

Plus particulièrement, au moins l'un des côtés du cadre comporte par exemple un dégagement de réception d'une conduite d'arrosage, voire de manière analogue un dégagement constituant en lui-même une telle conduite. Cette conduite d'arrosage est en relation avec le réseau d'irrigation et est perméable, tel qu'en matière alvéolaire ou micro-perforée, ou de manière analogue est pourvue d'orifices d'arrosage du substrat.

Le dégagement de réception de la conduite d'arrosage est notamment formé par une alvéole ménagée dans le côté du cadre. Indifféremment, cette alvéole est noyée à l'intérieur du côté du cadre pour l'arrosage du substrat par l'intermédiaire d'orifices d'arrosage ménagés à travers le côté du cadre, ou encore cette alvéole est directement ouverte sur le volume intérieur du cadre, soit pour constituer en elle-même la conduite d'arrosage, soit pour constituer un support de réception pour une conduite d'arrosage.

Selon une variante de réalisation, le cadre est accessoirement équipé d'au moins un orifice d'évacuation d'un excédent de liquide hors du substrat vers l'extérieur du module, ledit orifice d'évacuation étant par exemple en communication vers l'extérieur des modules pour une évacuation à l'air dudit excédent de liquide, ou encore étant en relation avec un réseau de collecte des excédents de liquide d'arrosage, lui-même en relation avec le réseau d'irrigation en vue d'une participation dudit excédent de liquide à un nouvel arrosage du substrat. On comprendra que les modules sont susceptibles de comporter un couple d'orifice d'évacuation, l'un vers l'extérieur et l'autre en relation avec le réseau de collecte.

Plus particulièrement, la structure modulaire est équipée de moyens de collecte du liquide d'arrosage et d'acheminement de ce dernier vers le réseau d'irrigation en vue de son réemploi.

Ces moyens de collecte sont indifféremment, indépendamment ou en combinaison, soit ménagés à la base de la structure modulaire en étant agencé en gouttière par exemple, soit constitués de canaux de collecte participant du réseau de collecte, en étant logés dans le volume intérieur et/ou dans au moins l'un des côtés du cadre. On comprendra que les canaux de collecte sont indifféremment externes aux cadres et/ou formés de canaux de communication entre deux modules voisins.

Les conduites d'arrosage sont avantageusement mises en communication avec l'un quelconque au moins d'un canal externe du réseau d'irrigation et d'une conduite d'arrosage d'un module voisin, par l'intermédiaire de raccords qui traversent les côtés du cadre ou d'organes de jonctions analogues par exemple.

On relèvera que l'arrosage du substrat contenu à l'intérieur de chacun des modules est susceptible d'être effectuée de manière principale par les conduites d'arrosage que comportent les modules, et de manière secondaire par une circulation par gravité du liquide d'irrigation de l'un à l'autre des modules, par l'intermédiaire de conduites de raccordement ou de raccords entre deux modules voisins, voire par l'intermédiaire d'orifices dans les côtés du cadre sont pourvus.

Par ailleurs, les conduites d'arrosage sont susceptibles d'être ménagées au voisinage du bord frontal des cadres pour acheminer le liquide en zone frontale du substrat. Ces dispositions sont telles que l'humidité résiduelle du substrat soit la plus éloignée possible de la paroi et que le liquide arrose le substrat dans une zone susceptible d'être la plus asséchée.

Selon une autre variante de réalisation, cet arrosage frontal du substrat est obtenu à partir de l'arrosage secondaire susvisé selon lequel le liquide circule par gravité de l'un à l'autre de deux modules voisins.

Selon une forme préférée de réalisation du réseau d'irrigation, la source d'alimentation en liquide comprend une source d'alimentation en eau, eau du réseau de distribution ou eau en provenance d'une réserve, ou encore eau en provenance d'un forage spécifique par exemple.

A cette eau, sont préférentiellement additionnés des agents fertilisants et/ou des agents traitants. A cette fin, la source d'alimentation en liquide comprend aussi une source d'alimentation en liquide traitant pour les végétaux, tels qu'une réserve de substances nutritives et/ou de solutions phytosanitaires. Cette source d'alimentation en liquide traitant associe avantageusement une source d'alimentation en eau et au moins une réserve d'agents traitants pour les végétaux. Le réseau d'irrigation comprend des moyens d'acheminement de l'eau et du liquide traitant vers un canal principal d'irrigation respectif et des moyens de dosage de quantités respectives d'eau, de liquide traitant et d'agents traitants que comporte ce dernier, dont la mise en oeuvre est placée sous la dépendance de moyens de programmation.

On notera que les moyens de programmation comprennent en outre de préférence une sonde pour analyser le liquide d'arrosage collecté et pour commander par le biais d'un logiciel adapté l'enrichissement ou l'appauvrissement par dilution du liquide d'arrosage collecté en produit phytosanitaire ou nutritif, à la manière habituelle dans le domaine.

De préférence, la source d'alimentation en liquide comprend en outre le réseau de collecte des excédents d'arrosage, en relation avec les moyens de dosage.

Les moyens de programmation comprennent notamment des moyens de mémoire d'une quantité respective d'agents traitants à délivrer, des moyens de commande chronométriques et des moyens de commande comprenant des capteurs d'humidité du substrat.

On notera qu'il est accessoirement prévu de pourvoir les moyens d'irrigation du substrat de moyens associés aux moyens de dosage, pour arroser sélectivement les modules en fonction de leur situation d'ensoleillement et de la nature des végétaux qu'ils reçoivent respectivement.

Les moyens de jonction entre deux modules voisins comprennent de préférence des joints d'étanchéité interposés entre deux modules voisins, et/ou des plaques frontales de parement masquant la zone de jonction entre deux modules voisins.

La présente invention sera mieux comprise, et des détails en relevant apparaîtront, à la description qui va en être faite de formes préférées de réalisation, en relation avec les figures des planches annexées dans lesquelles :
La fig.1 est une vue schématique d'une structure modulaire associée à un réseau d'irrigation de la présente invention.
Les fig.2 à fig.9 sont des illustrations schématiques d'un cadre participant d'un module d'une structure modulaire de la présente invention, selon différentes variantes respectives de réalisation.
La fig.10 est une vue schématique frontale d'un module d'une structure modulaire de la présente invention.
Les fig. 11 à fig. 16 sont des vues schématiques de divers exemples respectifs de réalisation d'un cadre participant d'un module d'une structure modulaire de la présente invention.

Sur les figures, une structure modulaire est destinée à former un écran végétal d'une paroi d'un bâti, tel qu'une paroi de bâtiment, de hangar, de barrage, de réservoir d'hydrocarbure, ou encore un mur d'ouvrage du génie civil, tel que mur de soutènement ou mur anti-bruit bordant les voies de circulation. On comprendra que ces applications citées pour exemple ne sont pas restrictives quant à la portée de l'invention.

Cette structure modulaire est constituée d'une pluralité de modules disposés latéralement en adjacence, indifféremment à proximité les uns des autres ou disposés de manière isolée en étant répartis sur la paroi du bâti. Cette structure modulaire est en relation avec un réseau d'irrigation du substrat recevant les végétaux destinés à former l'écran végétal.

Chaque module est organisé en cadre 1 pour la réception en son volume intérieur du substrat dans lequel l'appareil racinaire des végétaux est ancré. Ces cadres 1 sont disposés de manière à orienter leur débouché frontal 2 parallèlement à la paroi 3, et sont équipés d'un organe ajouré de retenue du substrat, à travers lequel les végétaux 4 ont la faculté d'émerger. Il en résulte une exploitation maximale de la surface apparente des modules, hors de laquelle émergent les végétaux 4. En outre, la conformation en cadre 1 des modules permet de limiter aux bords des cadres 1 les parties apparentes du module à travers lesquels n'émergent pas les végétaux 4.

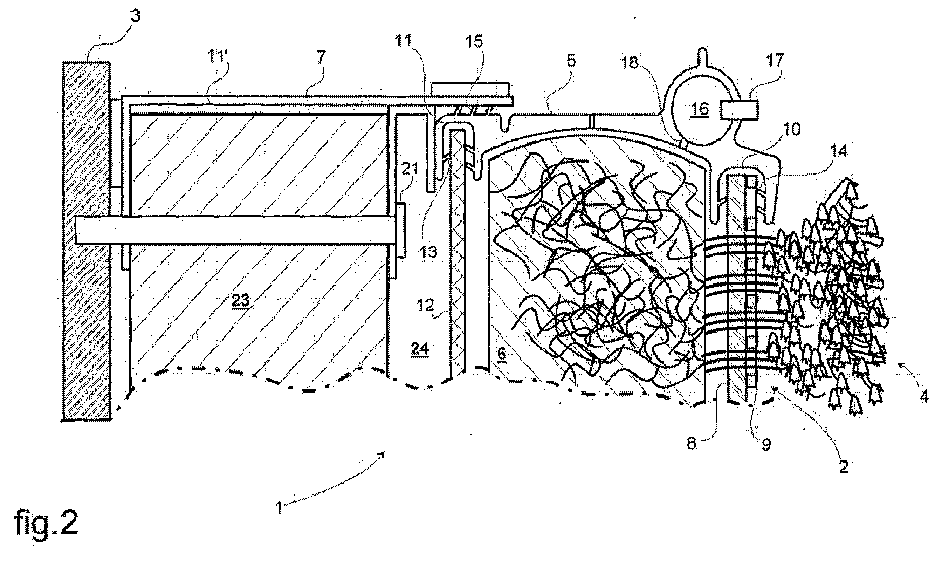

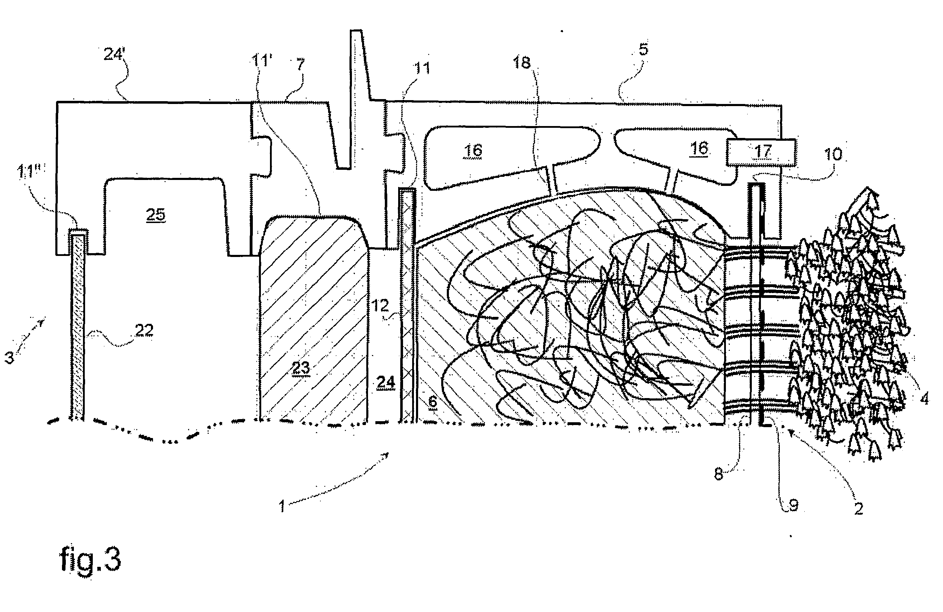

Sur les fig.2 et fig.3, le cadre 1 est composé d'un cadre élémentaire frontal 5 pour la réception du substrat 6 dans son épaisseur, à l'arrière duquel est fixé en superposition au moins un autre cadre élémentaire rigide 7. Sur ces figures, seul un côté du cadre 1, et notamment son côté supérieur est représenté. L'organe de retenue 8,9 est maintenu par emboîtement sur le cadre élémentaire frontal 5 par l'intermédiaire d'une gorge 10 que ce dernier 5 comporte dans la tranche interne de ses côtés.

L'organe de retenue est composé d'un grillage métallique 9 ou analogue, et d'une nappe textile 8 ou analogue, par exemple formée d'un feutre de protection de l'appareil racinaire des végétaux 4. Les ajours du grillage métallique 9 sont masqués par le feutre de projection 8, pour autoriser une retenue efficace du substrat 6 par l'organe de retenue 8,9 sans néanmoins faire obstacle à l'émergence des végétaux 4 hors du débouché 2 du cadre 1.

On notera que la tranche intérieure du cadre élémentaire frontal 5 est préférentiellement gauffrée, pour faciliter la tenue du substrat à l'intérieur du volume du cadre 1 et l'ancrage de l'appareil racinaire des végétaux 4.

Sur la fig.2, les différentes gorges 10 et 11 que comporte le cadre élémentaire frontal 5 pour la réception respective de l'organe de retenue 8,9 et d'une cloison étanche 12 de séparation entre les débouchés arrière et frontal du cadre 1, sont accessoirement équipées de lèvres de pincement 13 et 14, formant en outre organe d'étanchéité. On remarquera aussi la présence d'une telle lèvre 15 à la périphérie extérieure du cadre élémentaire frontal 5 pour former un joint d'étanchéité entre le cadre élémentaire frontal 5 et le cadre élémentaire rigide 7. Enfin, on relèvera aussi que selon cette variante, le cadre élémentaire frontal est préférentiellement formé à partir d'un matériau souple, caoutchouc notamment, facilitant la réalisation des lèvres 13,14 et joint d'étanchéité 15.

Par ailleurs, le cadre élémentaire frontal 5 supporte à l'arrière du substrat 6 ladite cloison de séparation 12, par emboîtement à l'intérieur de la gorge 11 ménagée dans la tranche interne des bords, ou côtés, du cadre. Cette cloison de séparation 12 est destinée à protéger la paroi de l'humidité en provenance du substrat 6, qui se trouve confiné entre la cloison de séparation 12 et l'organe de retenue 8,9. Par ailleurs encore, le cadre élémentaire frontal 8,9 loge dans ses bords un canal interne 16 d'arrosage ménagé au voisinage de son bord frontal. Ce canal interne 16 est en relation d'une part avec le réseau d'irrigation par l'intermédiaire de raccords auto-perçant 17, et d'autre part avec le substrat 6 par l'intermédiaire d'orifices 18 ménagés à travers les côtés du cadre élémentaire frontal 5.

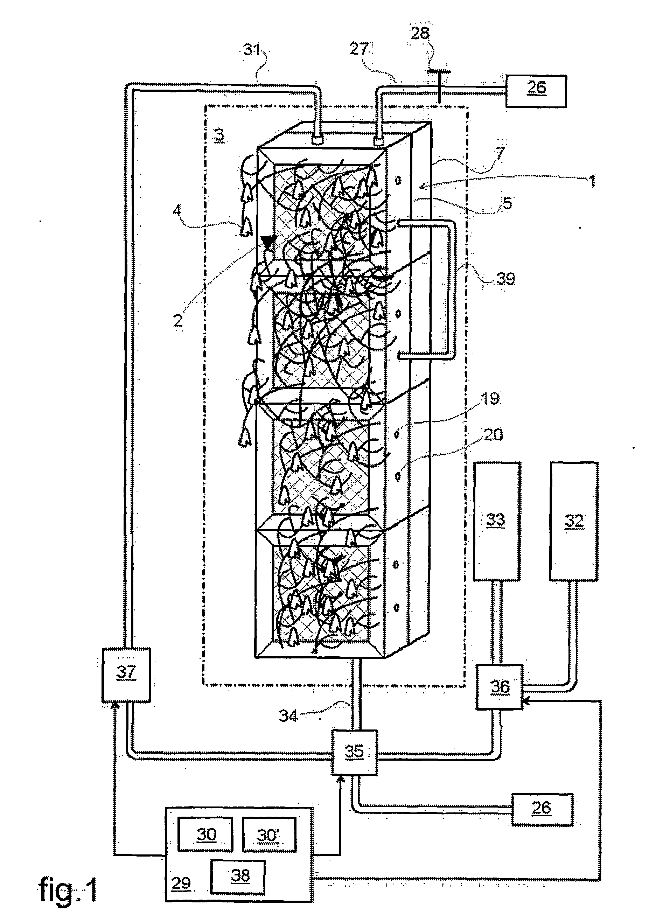

En se reportant à la fig.1, on remarquera que le cadre élémentaire frontal 5 est en outre pourvu d'orifices d'évacuation 19 et 20 d'un excédent de liquide d'irrigation vers l'extérieur du module, qui sont ménagés à travers les côtés du cadre. On notera que ces dispositions sont susceptibles d'être mises à profit pour la réception d'un excédent de liquide d'irrigation en vue de son réemploi.

Le cadre élémentaire rigide 7 est prévu pour la mise en relation du module avec la paroi 3 du bâti à masquer. Cette mise en relation est obtenue soit par l'intermédiaire d'une fixation du cadre élémentaire rigide 7 contre la paroi 3 du bâti, au moyen de boulons 21 par exemple tel qu'illustré sur la fig.2, soit en raison d'une participation à cette paroi 3 du cadre élémentaire rigide 7 lui-même, tel qu'illustré sur la fig.3. On relèvera que dans ce cas, une plaque de parement 22 est rapportée à l'arrière du module pour offrir une continuité apparente de paroi 3 d'un module à l'autre, cette plaque de parement 22 étant rapportée par emboîtement par exemple, à l'intérieur d'une gorge 11" que comportent les côtés du cadre 1. Le cadre élémentaire rigide 7 est porteur d'une couche 23 d'un matériau d'isolation phonique et thermique, un espace de ventilation 24 étant ménagé entre cette couche 23 et la cloison étanche 22. La couche 23 est notamment rapportée sur le cadre élémentaire rigide 7 par emboîtement à l'intérieur d'une gorge 11' que ce dernier 7 comporte.

Sur la fig.3, le cadre 1 comprend en outre un cadre élémentaire arrière 24' qui est rapporté en superposition sur le cadre élémentaire rigide 7 pour porter la plaque de parement 22. Ce cadre élémentaire arrière 24' comporte en outre dans ses bords un dégagement formant une gaine technique 25.

En revenant à la fig.1, un réseau d'irrigation est aménagé pour arroser le substrat contenu dans les modules et permettre un développement durable des végétaux. Ce réseau d'irrigation comprend une première source d'alimentation en eau 26, eau du réseau notamment, pour l'arrosage régulier du substrat par l'intermédiaire d'un premier canal principal 27 d'irrigation des modules.

On relèvera dès à présent que la délivrance en eau vers le premier canal principal 27 d'irrigation est effectuée au moyen d'une vanne 28 de délivrance, dont la mise en oeuvre est placée sous la dépendance de moyens 29 de programmation en relation avec des moyens de commande, tels que des moyens 30 de commande chronométriques et/ou des moyens 30' de commande comprenant des capteurs d'humidité du substrat localisés dans ce dernier.

Le réseau d'irrigation comprend aussi une deuxième source d'alimentation en liquide traitant pour l'acheminement éventuel d'agents traitant, par l'intermédiaire d'un deuxième canal principal d'irrigation 31.

Cette deuxième source d'alimentation en liquide est composée d'au moins une source 26 d'alimentation en eau, eau du réseau notamment, en relation avec une réserve 32 de substances nutritives et une réserve 33 de solutions phytosanitaires, voire des moyens 34 de récupération du liquide résiduel issu d'un précédent arrosage.

Le réseau d'irrigation comporte des moyens de dosage 35,36 comprenant au moins un organe de distribution sélective en relation avec un organe 37, tel qu'une pompe, d'acheminement du liquide traitant vers le deuxième canal principal 31 d'alimentation.

La mise en oeuvre des moyens de dosage 35,36 et de la pompe 37 est placée sous la dépendance desdits moyens de programmation 29, qui comprennent en outre des moyens 38 de mémoire d'une quantité respective d'agents traitants à délivrer, en vue de l'acheminement à périodes pré-mémorisées d'un liquide traitant vers les modules, comprenant de l'eau associée à l'un quelconque au moins des substances nutritives et des substances phytosanitaires, voire du liquide résiduel.

Les canaux principaux d'irrigation 27 et 31 sont chacun en communication avec au moins un module, et notamment un module supérieur, par l'intermédiaire d'un dit raccord auto-perçant 17. L'acheminement du liquide d'irrigation d'un module à l'autre s'effectue soit par l'intermédiaire de raccord 17 pour la mise en relation des canaux internes 16 de l'un à l'autre des modules, soit par l'intermédiaire de canaux externes 39 reliant l'un à l'autre les modules.

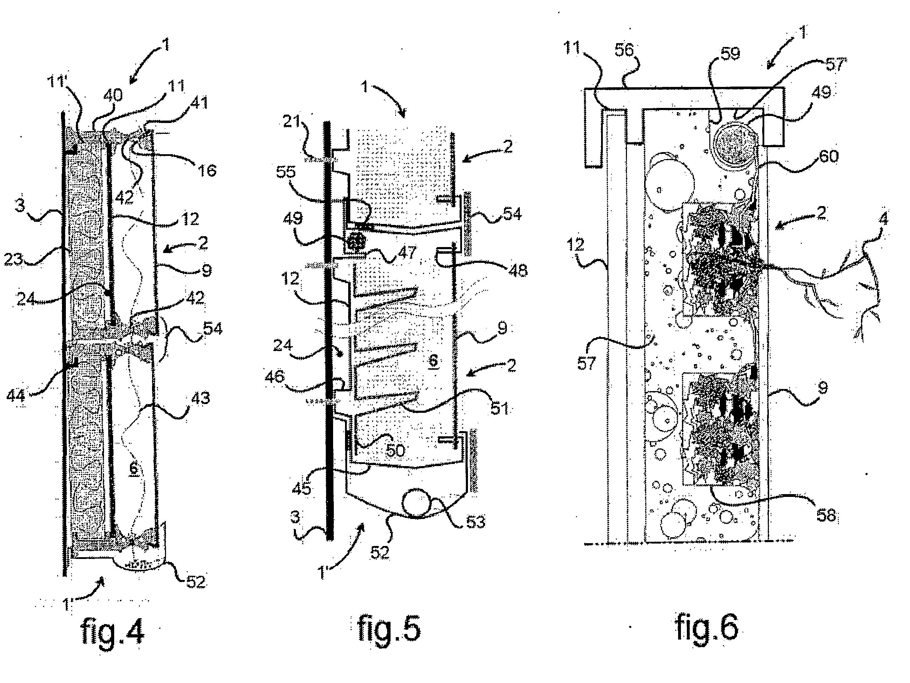

Sur la variante illustrée sur la fig.4, les cadres 1 ou 1' sont formés à partir d'un profilé 40 unique, tel qu'en mousse dense ou en matière plastique, comportant dans leurs tranches des gorges internes 11 et 11', à l'instar des variantes représentées sur les fig.2 et fig.3, pour la réception de la cloison étanche 12 de séparation et de la couche 23 d'isolation. L'organe de retenue est seulement formé d'un élément maillé, tel qu'une grille métallique de renfort, qui comporte un relief 41, tels que rebords extérieurs, pour son emboîtement sur un relief correspondant du profilé 40. Le profilé 40 comporte au moins un canal interne 16 pour l'arrosage principal du substrat, qui communique avec le volume interne du cadre, et un orifice 42 d'écoulement du fluide d'irrigation 43 de l'un à l'autre de deux cadres 1 et 1' superposés pour un arrosage secondaire du substrat. On remarquera enfin sur cet exemple de réalisation, que la jonction des cadres 1 et 1' avec la paroi 3 du bâti est réalisée par crochetage 44 d'une part, et par repos du cadre 1 supérieur sur le cadre 1' qui lui est inférieur.

Sur la fig.5, le cadre 1 est réalisé à partir d'une tôle pliée 45, pour constituer un ensemble monobloc composé des côtés du cadre 1, et de la cloison de séparation 12. Le cadre 1 comporte des reliefs 46 pour ménager l'espace de ventilation 24 entre la cloison de séparation 12 et la paroi 3 du bâti, ces reliefs étant en outre exploités pour fixer le cadre à la paroi 3 du bâti, par boulonnage 21 par exemple.

Le cadre 1 comporte en outre des reliefs 47 et 48 pour ménager des organes de réception, pour l'un 47 d'un conduit interne d'arrosage 49, et pour l'autre 48 d'emboîtement de l'organe de retenue 9.

La cloison étanche de séparation 12 reçoit en son fond une plaque 50, thermoformée par exemple, pourvue de reliefs 51, qui participent de la rigidification de la cloison de séparation 12, et ménagent dans le substrat des zones de rétention du fluide d'irrigation, au fond du cadre 1.

On notera aussi sur cette variante, à l'instar de la variante illustrée sur la fig.4, la présence d'une gouttière 52 ménagée à la base de la structure modulaire pour collecter les excédents de fluide d'arrosage.

Sur la variante de la fig.5, cette gouttière 52 est équipée d'une crapotine 53 ou analogue.

Par ailleurs en revenant aussi à la fig.4, des plaques d'habillage 54 formant parement de la face frontale de la structure modulaire sont disposées dans les zones de jonction entre deux cadres 1 et 1' voisins. Ces plaques d'habillage 54 peuvent être en bois par exemple, ou en tout autre matériau conférant à la face frontale globale de la structure modulaire un aspect extérieur particulier. On relèvera que ces dispositions relatives à la présence de la gouttière 52 et aux plaques d'habillage 54 sont transposables à d'autres formes de réalisation des modules de la présente invention.

On notera enfin sur la fig.5 la présence d'un joint d'étanchéité 55 interposé entre deux modules voisins.

Sur la fig.6, les bords du cadre 1 sont constitués d'un profilé 56 comportant des gorges 11 et 57' pour la réception respectivement de la cloison de séparation 12 et d'au moins un élément 57, sinon plusieurs éléments 57 superposés, en polystyrène ou analogue. Cet élément 57 comporte des alvéoles 58 logeant le substrat, ainsi qu'une alvéole 59 de réception d'une conduite 49 d'arrosage, le fluide d'irrigation étant acheminé à travers le substrat par l'intermédiaire de tuyaux micro-perforés 60, depuis la conduite d'arrosage 49 vers une conduite de collecte, non représentée sur la figure, située à la base du cadre 1.

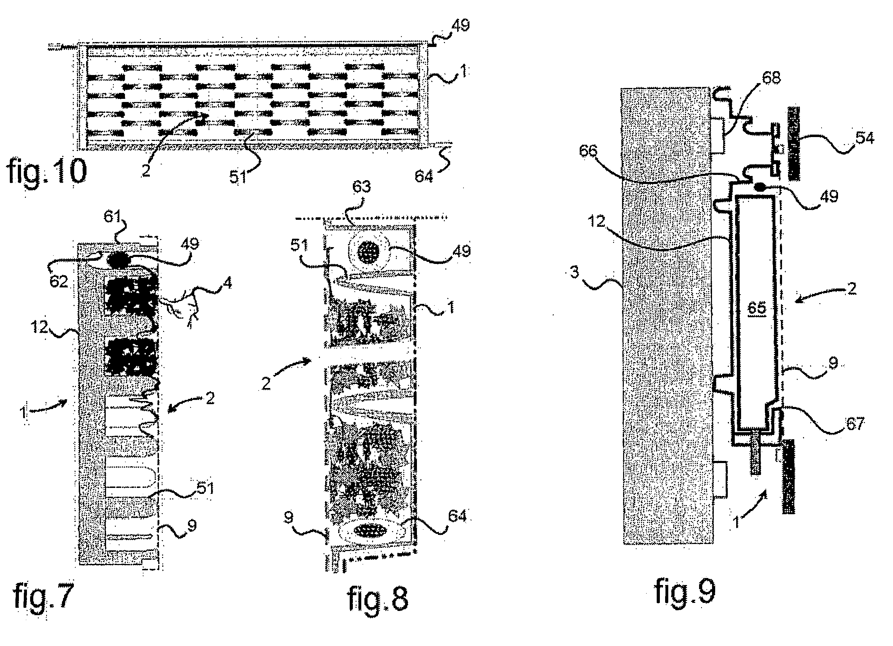

Sur les fig.7 et fig.10, le cadre 1 est conformé en caisson 61, tel qu'en polystyrène ignifugé ou analogue, composé des bords du cadre et de la cloison de séparation 12. Le bord supérieur du caisson 61 comporte une alvéole 62 pour le passage d'une conduite d'arrosage 49, tandis que la cloison de séparation 12 comporte une pluralité de reliefs 51 de rigidification et de rétention du fluide d'arrosage, disposés en quinconce pour autoriser le passage du fluide à travers le volume global du substrat contenu à l'intérieur du cadre 1.

Sur la fig.8, le cadre 1 est formé à partir d'une plaque thermoformée 63 pourvue des reliefs 51 de rigidification et de rétention du fluide d'arrosage.

Cette plaque 63 est équipée de l'organe de retenue 9, celui-ci étant sur l'exemple illustré constitué d'un filet soudé sur la plaque 63. En outre, la plaque thermoformée 63 comporte des alvéoles 64 à ses extrémités supérieure et inférieure pour le passage respectivement d'une conduite d'arrosage 49 et d'une conduite de collecte 64.

Sur la fig.9, le cadre 1 reçoit le substrat conditionné à l'intérieur d'un conteneur 65, ce dernier 65 étant accessoirement équipé dans son volume intérieur des reliefs de rétention du fluide d'irrigation, non représentés. Ce conteneur 65 est perméable, le substrat étant arrosé depuis une conduite 49 logé dans une alvéole 66 du bord supérieur du cadre 1. On remarquera que le bord inférieur du cadre comporte un retour 67 de soutien du conteneur 65. La fixation du cadre 1 sur la paroi 3 du bâti est par exemple réalisée par boulonnage sur une armature 68 solidaire de la paroi 3 du bâti.

Selon une variante non représentée sur les figures, le cadre, la cloison de séparation et l'organe de retenue sont constitués d'un ensemble monobloc obtenu par moulage. Par exemple, cet ensemble monobloc est en matière plastique ou analogue, voire en béton préférentiellement allégé.

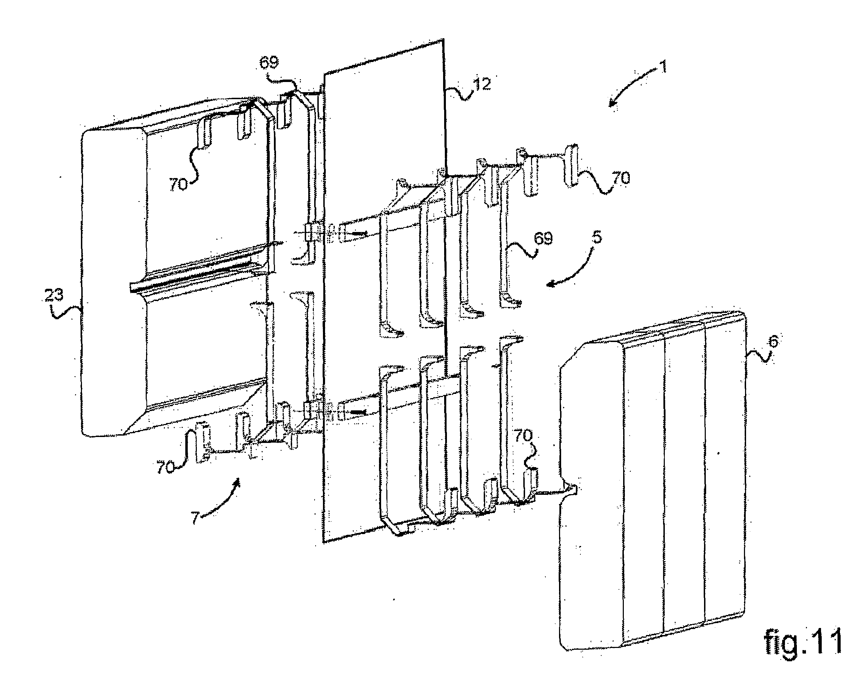

Sur la fig. 11, les modules sont formés à partir d'une structure métallique, telle qu'en aluminium. Le cadre 1 constituant chacun des modules est formé à partir d'une armature métallique 69 composée d'une pluralité d'éléments d'ossature assemblés sur une paroi formant la cloison étanche 12 de séparation. Ces profilés 69 ménagent ensemble de part et d'autre de cette cloison étanche 12, respectivement le cadre élémentaire frontal 5 de réception du substrat 6 et le cadre élémentaire 7 de réception d'une couche d'un matériau d'isolation phonique et thermique 23. Les éléments d'ossature 69 comportent des rebords 70 qui constituent des organes de retenue, pour ceux frontaux du substrat 6, et pour ceux arrières de la couche de matériau isolant 23.

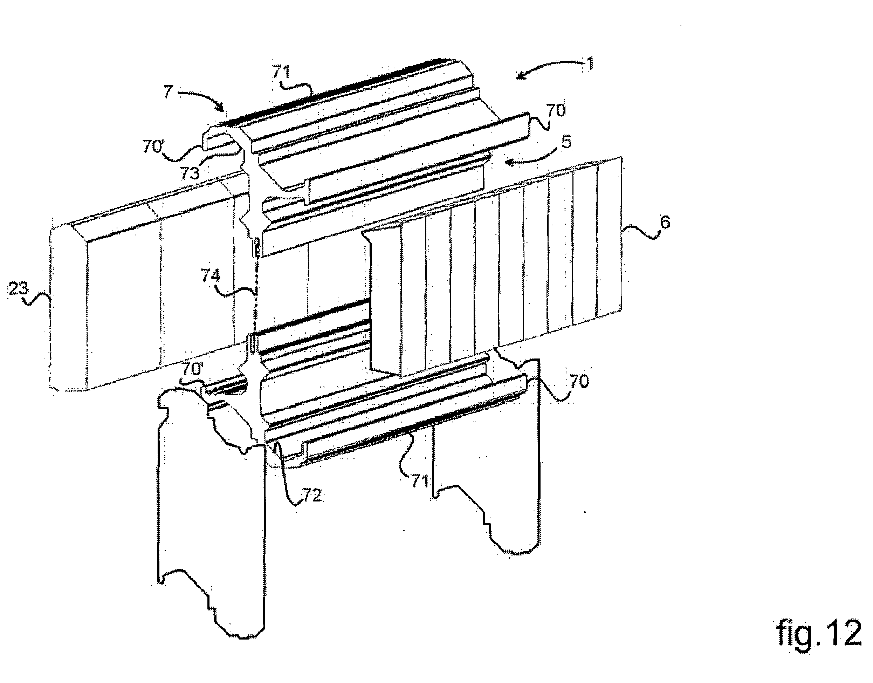

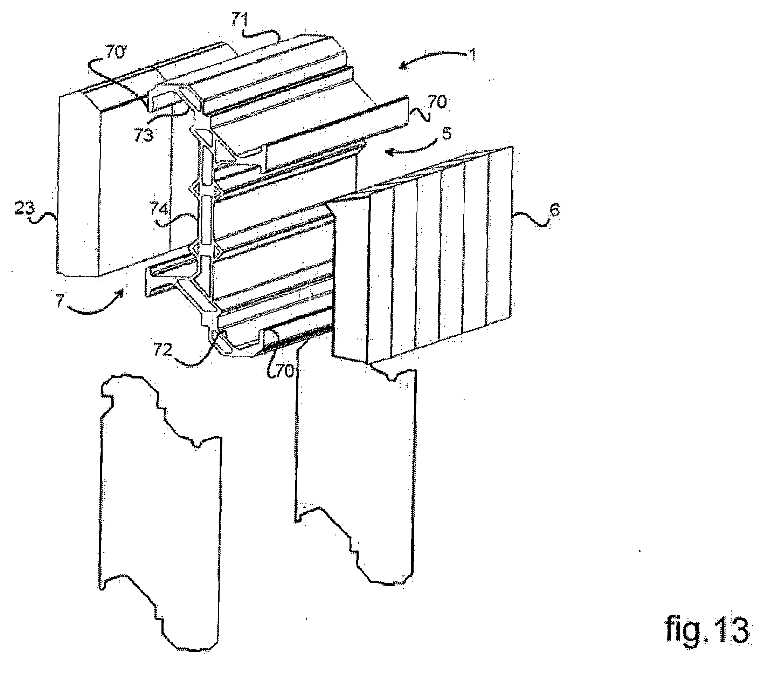

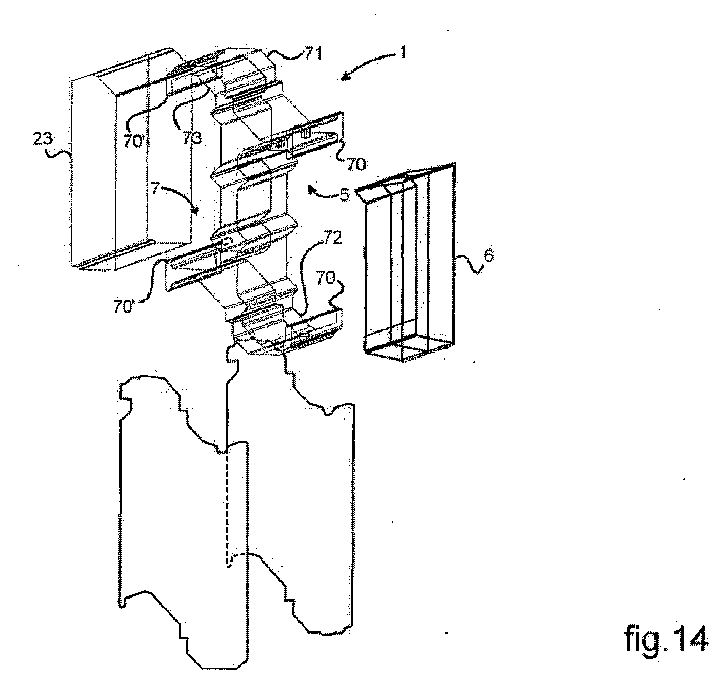

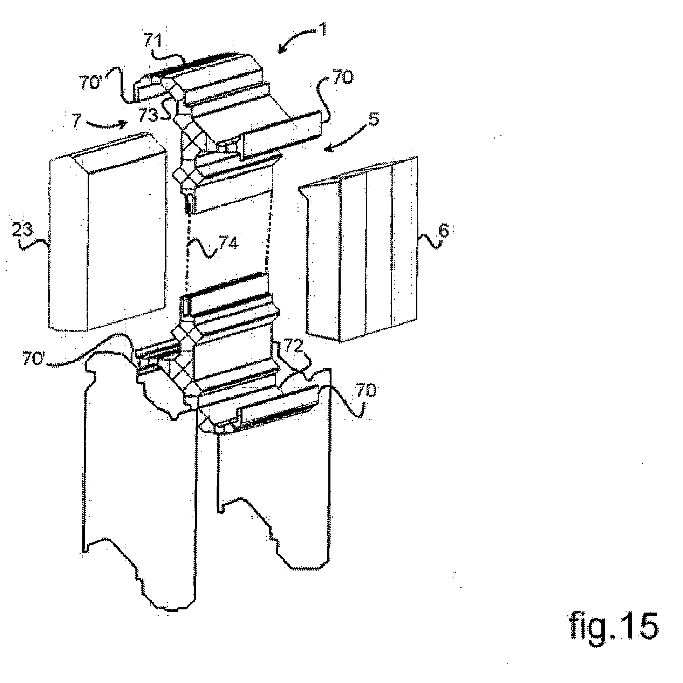

Sur la fig.12 à fig.15, les modules sont formés à partir de profilés, respectivement en bois sur la fig.12, en terre cuite sur la fig.13, découpé au jet d'eau sur la fig.14, et en matériau thermoplastique sur la fig.15. Plus particulièrement, le cadre 1 constituant chacun des modules est formé à partir d'au moins un profilé 71 à double alvéole 72 et 73. Chacune de ces alvéoles délimitent pour l'une, avant 72, le cadre élémentaire frontal 5 de réception du substrat 6, et pour l'autre arrière 73, le cadre élémentaire 7 de réception de la couche de matériau isolant 23. Les alvéoles 72 et 73 sont ménagées de part et d'autre d'une cloison étanche de séparation 74 entre le cadre élémentaire frontal 5 et le cadre élémentaire 7 de réception de la couche de matériau isolant 23. Les profilés 71 sont pourvus de rebords 70 et 70' pour la retenue respectivement du substrat 6 et de la couche de matériau isolant 23.

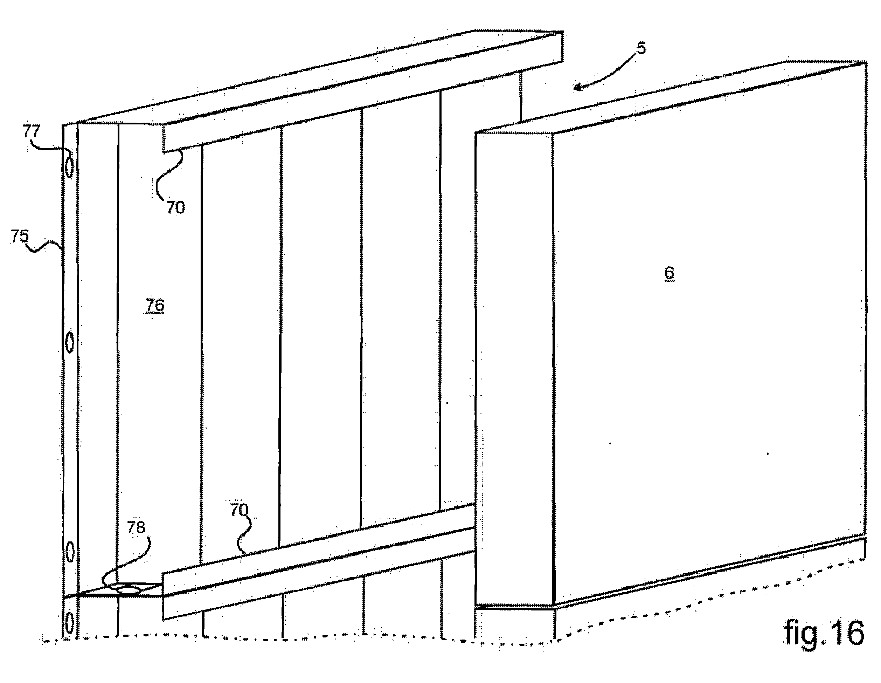

Sur la fig.16, les modules sont réalisés à partir de toiles textiles 75 et 76. Sur l'exemple illustré, une toile textile intérieure 75 forme la cloison étanche de séparation. Sur cette toile 75 est rapportée par couture une toile extérieure 76 formant le cadre frontal 5. La toile intérieure 75 est munie d'oeillets 77 de fixation à une structure porteuse. La toile textile intérieure comportent des rebords 70 de retenue du substrat 6. Le cadre frontal 5 loge en outre un conduit microperforé 78 pour l'irrigation du substrat 6.

## Revendications

1. Structure modulaire d'aménagement d'une paroi sensiblement verticale et/ou inclinée d'un bâti pour la réception de végétaux d'ornement, ladite structure modulaire comprenant une pluralité de modules de réception d'un substrat (6) pour le développement des végétaux (4) et des moyens de mise en relation desdits modules avec une paroi du bâti (3), en vue de la formation d'un écran végétal masquant cette dernière (3), ladite structure modulaire étant associée à un réseau d'irrigation du substrat en relation avec une source d'alimentation en liquide, **caractérisée :**
**en ce que** les modules sont chacun principalement agencés en un cadre (1) comportant dans son plan une cloison de séparation étanche (12) divisant le volume délimité par le cadre (1) en un débouché arrière constituant un moyen d'isolation apte à contenir un matériau isolant, et un débouché frontal (2), ce dernier débouché (2) étant équipé d'un organe ajouré (8,9) de retenue du substrat (6) reçu à l'intérieur du volume délimité par le cadre (1), les modules étant équipés de moyens (11 ",21,44) de mise en relation avec la paroi (3) qui sont organisés pour maintenir les cadres (1) en adjacence latérale dans leur plan général, parallèlement à la paroi du bâti (3), de sorte que le débouché (2) des modules hors duquel émergent les végétaux (4), correspondant au débouché frontal (2) de leur cadre (1), soit disposé sensiblement parallèlement à la paroi du bâti (3).

2. Structure modulaire selon la revendication 1, **caractérisée :**
**en ce que** le module est formé par assemblage d'une pluralité d'éléments, dont des profilés (5,40,56) aboutés constituant les côtés du cadre (1), qui sont équipés de moyens de liaison (11) au moins avec la cloison de séparation (12) et avec l'organe ajouré de retenue (8,9).

3. Structure modulaire selon la revendication 1, **caractérisée :**
**en ce que** le module comprend un caisson monobloc composé au moins du cadre (1) et de la cloison de séparation (12), le dit caisson étant formé par moulage et étant équipé de moyens de liaison avec l'organe de retenue (9).

4. Structure modulaire selon l'une quelconque des revendications précédentes, **caractérisée :**
**en ce que** l'organe de retenue est principalement constitué d'un élément maillé (9) accessoirement associé à une nappe textile (8) de protection de l'appareil racinaire des végétaux (4) interposé entre l'élément maillé (9) et le substrat (6).

5. Structure modulaire selon l'une quelconque des revendications précédentes, **caractérisée :**
**en ce que** la cloison de séparation (12) est équipée d'une pluralité d'éléments rigides (51) de cloisonnement intérieur du volume intérieur du cadre (1).

6. Structure modulaire selon la revendication 5, **caractérisée :**
**en ce que** les éléments de cloisonnement (51) sont discontinus et s'étendent sur une partie de l'épaisseur du cadre (1) pour d'une part constituer des zones de rétention du liquide d'irrigation et d'autre part autoriser le passage de l'humidité à travers le volume global du substrat (6).

7. Structure modulaire selon l'une quelconque des revendications précédentes, **caractérisée :**
**en ce que** le substrat (6) est conditionné à l'intérieur du volume du cadre (1) indifféremment soit en vrac, soit à l'intérieur d'au moins un conteneur perméable (65).

8. Structure modulaire selon l'une quelconque des revendications précédentes, **caractérisée :**
**en ce que** les côtés du cadre (1) sont équipés de moyens (11') de réception d'une couche (23) d'isolation phonique et thermique disposée à l'arrière de la cloison de séparation (12).

9. Structure modulaire selon l'une quelconque des revendications 1 et 8, **caractérisée :**
**en ce qu'**un espace de ventilation (24) est ménagé entre la cloison (12) de séparation et la paroi (3) du bâti, le cas échéant entre la cloison (12) de séparation et la couche (23) d'isolation phonique et thermique.

10. Structure modulaire selon l'une quelconque des revendications précédentes, **caractérisée :**
**en ce que** les côtés du cadre (1) sont équipés de moyens de réception d'une paroi de parement (22) constituant ladite paroi (3) du bâti.

11. Structure modulaire selon l'une quelconque des revendications 8 à 10, **caractérisée :**
**en ce que** les moyens de réception de l'une quelconque au moins de la couche d'isolation (23), de la paroi de parement (22) et de la cloison de séparation (12) sont indifféremment constitués par des éléments porteurs (7,24') conformés en cadre et rapportés en prolongement et en superposition sur le cadre (1) de réception du substrat (6), et/ou par des reliefs d'emboîtement (11,11',11") ménagés dans les bords du cadre (1).

12. Structure modulaire selon l'une quelconque des revendications précédentes,
**caractérisée :**
**en ce que** les moyens de mise en relation des modules avec la paroi du bâti (3) sont des moyens de fixation (21,44) des cadres (1) sur la paroi (3).

13. Structure modulaire selon l'une quelconque des revendications précédentes, **caractérisée :**
**en ce qu'**une gaine technique (25) est ménagée dans l'un quelconque au moins des côtés du cadre (1).

14. Structure modulaire selon l'une quelconque des revendications précédentes, **caractérisée :**
**en ce qu'**au moins l'un des côtés du cadre (1) comporte un dégagement (16,47,62) de réception d'une conduite perméable d'arrosage (16,49) du substrat (6) en relation avec le réseau d'irrigation.

15. Structure modulaire selon la revendication 14, **caractérisée :**
**en ce que** ledit dégagement (16,47,62) de réception d'une conduite d'arrosage (16,49) est formé par une alvéole ménagée dans le côté du cadre (1), indifféremment en étant noyée à l'intérieur de celui-ci pour l'arrosage du substrat (6) par l'intermédiaire d'orifices d'arrosage (18) ménagés à travers le côté du cadre (1), et/ou en étant directement ouverte sur le volume intérieur du cadre (1).

16. Structure modulaire selon l'une quelconque des revendications précédentes, **caractérisée :**
**en ce qu'**elle est équipée de moyens de collecte (42,52,53,64) du liquide d'arrosage et d'acheminement de ce dernier vers le réseau d'irrigation en vue de son réemploi, ces moyens de collecte étant indifféremment ménagés à la base de la structure modulaire et/ou constitués de canaux de collecte participant d'un réseau de collecte.

17. Structure modulaire selon l'une quelconque des revendications 15 et 16, **caractérisée :**
**en ce que** les conduites d'arrosage (16,49) sont mises en communication avec l'un quelconque d'un canal externe (27,31,39) du réseau d'irrigation et une conduite d'arrosage (16,49) d'un module voisin.

18. Structure modulaire selon l'une quelconque des revendications 15 à 17, **caractérisée :**
**en ce que** les conduites d'arrosage (16,49) sont ménagées au voisinage du bord frontal des cadres (1) pour acheminer le liquide en zone frontale du substrat (6), de sorte que l'humidité résiduelle du substrat (6) soit la plus éloignée possible de la paroi (3) et que le liquide arrose le substrat (6) dans une zone susceptible d'être la plus asséchée.

19. Structure modulaire selon l'une quelconque des revendications précédentes, **caractérisée :**
**en ce que** la source d'alimentation en liquide comprend une source d'alimentation en eau (26) et une source d'alimentation en liquide traitant associant à une source d'alimentation en eau (26), au moins une réserve (32,33) d'agents traitants pour les végétaux (4), le réseau d'irrigation comprenant des moyens (37,28) d'acheminement de l'eau et du liquide traitant vers un canal principal d'irrigation respectif (27,31) et des moyens (35,36) de dosage, de quantités respectives d'eau, de liquide traitant et d'agents traitants que comporte ce dernier, dont la mise en oeuvre est placée sous la dépendance de moyens de programmation (29).

20. Structure modulaire selon les revendications 16 et 19, **caractérisée :**
**en ce que** la source d'alimentation en liquide comprend en outre le réseau de collecte pour récupérer des excédents d'arrosage, en relation avec les moyens (35,36) de dosage.

21. Structure modulaire selon la revendication 19, **caractérisée :**
**en ce que** les moyens de programmation (29) comprennent des moyens (38) de mémoire d'une quantité respective d'agents traitants à délivrer, des moyens (30) de commande chronométriques et des moyens (30') de commande comprenant des capteurs d'humidité du substrat.

22. Structure modulaire selon l'une quelconque des revendications précédentes, **caractérisée :**
**en ce que** les moyens de jonction entre deux modules voisins comprennent des joints d'étanchéité (55) interposés entre deux modules voisins et des plaques frontales de parement (54) masquant la zone de jonction entre deux modules voisins.

## Claims

1. Modular structure to accommodate a wall largely vertical and/or tilted on a fitting to receive ornamental plants, which modular structure includes a number of reception modules of a substrate (6) for plant (4) growth and means to bring the said modules into relation with a wall of the fitting (3), with a view to forming a plant screen masking the said fitting (3), which modular structure is associated with an irrigation network for the substrate in relation with a liquid feed source,
**characterized:**
**In that** the modules are each mainly fitted into a frame (1) including in its plane a sealed separation partition (12) dividing the volume delimited by the frame (1) and a rear outlet constituting a means of insulation capable of containing an insulation material, and a front outlet (2), which latter outlet (2) is equipped with a cut-out body (8,9) to retain the substrate (6) housed inside the volume delimited by the frame (1), with the modules being equipped with means (11",21,44) to link with the wall (3) and are arranged to hold the frames (1) laterally adjacent in their general plane, in parallel with the wall of the fitting (3), so that the outlet (2) of the modules from which the plants (4) emerge corresponding to the front outlet (2) of their frame (1), is arranged largely parallel to the wall of the fitting.

2. Modular structure according to claim 1, **characterised:**
**in that** the module is formed by assembly of several elements, including joined sections (5,40,56) making the sides of the frame (1), that are equipped with links (11) at least with the separation partition (12) and with the retainer cut-out body (8,9).

3. Modular structure according to claim 1, **characterised:**
**in that** the module includes a single-block chamber comprising at least the frame (1) and the separation partition (12), with the said chamber being formed by moulding and equipped with links to the retainer body (9).

4. Modular structure according to any of the previous claims, **characterised:**
**in that** the retainer body mainly comprises a meshed element (9) accessorily associated with a textile protection cover (8) for protection of the plant (4) root systems placed between the meshed element (9) and the substrate (6).

5. Modular structure according to any of the previous claims, **characterised:**
**in that** the separation partition (12) is equipped with a number of rigid elements (51) for interior partitioning of the inner volume of the frame (1).

6. Modular structure according to claim 5, **characterised:**
**in that** the partitioning elements (51) are discontinuous and stretch over part of the thickness of the frame (1) to firstly constitute zones for retention of irrigation liquid and secondly allow for humidity to pass through the overall volume of the substrate (6).

7. Modular structure according to any of the previous claims, **characterised:**
**in that** the substrate (6) is packed inside the volume of the frame (1) either in bulk or inside at least one permeable container (65).

8. Modular structure according to any of the previous claims, **characterised:**
**in that** the sides of the frame (1) are equipped with means (11') to house a sound and heat insulation layer (23) arranged to the rear of the separation partition (12).

9. Modular structure according to either of claims 1 and 8, **characterised:**
**in that** a ventilation space (24) is arranged between the separation partition (12) and the wall (3) of the fitting, if appropriate between the separation partition (12) and the sound and heat insulation layer (23).

10. Modular structure according to any of the previous claims,
**characterised:**
**in that** the sides of the frame (1) are equipped with means to receive a facing wall (22) making the said wall (3) of the fitting.

11. Modular structure according to any of the previous claims,
**characterised:**
**in that** the means for reception of any one at least of the insulation layers (23) of the facing wall (22) and the separation partition (12) are indifferently made up by bearing elements (7,24') moulded in the frame and added to the extension and superimposed on the frame (1) to receive the substrate (6), and/or by interlocked reliefs (11,11',11") fitted into the edges of the frame (1).

12. Modular structure according to any of the previous claims,
**characterised:**
**in that** the means to bring the modules into relation with the wall of the fitting (3) are attachments (21,44) for the frames (1) on the wall (3).

13. Modular structure according to any of the previous claims,
**characterised:**
**in that** a technical sheath (25) is fitted into any one at least of the sides of the frame (1).

14. Modular structure according to any of the previous claims,
**characterised:**
**in that** at least one of the sides of the frame (1) includes a clearance (16,47,62) for reception of a permeable irrigation pipe (16,49) for the substrate (6) in relation with the irrigation network.

15. Modular structure according to claim 5, **characterised:**
**in that** the said clearance (16,47,62) for reception of a permeable irrigation pipe (16,49) is formed by a void let into the side of the frame (1), either cored into it for irrigation of the substrate (6) through the irrigation holes (18) let in through the side of the frame (1), and/or being directly open onto the inner volume of the frame (1).

16. Modular structure according to any of the previous claims,
**characterised:**
**in that** it is equipped with means (42,52,53,64) to collect the irrigation liquid and conveying the said liquid towards the irrigation network for it to be re-used, these collection means being indifferently let into the base of the modular structure and/or made up of channels for collection playing a part in the collection network.

17. Modular structure according to either of claims 15 and 16, **characterised:**
**in that** the irrigation pipes (16,49) are brought to connect with any external channel (27,31,39) of the irrigation network and an irrigation pipe (16,49) of a neighbouring module.

18. Modular structure according to either of claims 15 and 17, **characterised:**
**in that** the irrigation pipes (16,49) are arranged close to the front edge of the frames (1) to convey the liquid to the front area of the substrate (6) so that the residual humidity of the substrate (6) is as far as possible from the wall (3) and the liquid irrigates the substrate (6) in a area likely to be the most dried out.

19. Modular structure according to any of the previous claims, **characterised:**
**in that** the liquid feed source includes a water supply (26) and a treatment liquid source which water supply (26) is combined with at least one reserve (32,33) of treatment agents for the plants (4), the irrigation network including means (37,28) to convey water and treatment liquid to a main irrigation respectively (27,31) and means for dosage (35,36) for the respective quantities of water, treatment liquid and treating agents included in the latter, whose implementation is governed by programming resources (29).

20. Modular structure according to claims 16 and 19, **characterised:**
**in that** the liquid supply source also includes a collection network to recover irrigation excesses in relation with the means for dosage (35,36).

21. Modular structure according to claim 19, **characterised:**
**in that** the programming resources (29) include data storage media (38) for a respective quantity of agents to be delivered, timing control means (30) and controls (30') including substrate humidity sensors.

22. Modular structure according to any of the previous claims, **characterised:**
**in that** the means for junction between two neighbouring modules include seals (55) inserted between two neighbouring modules and facing front plates (54) to mask the junction area between two neighbouring modules.

## Patentansprüche

1. Modulare Struktur, die dazu bestimmt ist, eine im Wesentlichen senkrechte und/oder geneigte Wand eines Bauwerks derart zu gestalten, dass diese Zierpflanzen aufnehmen kann; wobei die modulare Struktur mehrere Module umfasst, die dazu bestimmt sind, ein Substrat (6) für die Entwicklung der Pflanzen (4) aufzunehmen, sowie Mittel zur Herstellung einer Verbindung zwischen den Modulen und der Wand (3) des Bauwerks, um letztere (3) durch Bildung eines Pflanzenbewuchses zu verdecken, wobei die modulare Struktur mit einem Leitungssystem zur Bewässerung des Substrats in Verbindung steht, welches wiederum mit einer Quelle zur Versorgung mit einer Flüssigkeit in Verbindung steht, **dadurch gekennzeichnet, dass**:
jedes der Module hauptsächlich aus einem Rahmen (1) besteht, der in seiner Ebene eine undurchlässige Trennwand (12) aufweist, welche das Volumen, das durch den Rahmen (1) begrenzt wird, in einen hinteren Bereich, welcher ein Isolierungsmittel darstellt, das ein Isoliermaterial enthalten kann, sowie in einen vorderen Bereich (2) aufteilt, wobei der letztere Bereich (2) mit einem Element (8, 9) versehen ist, das kleine Öffnungen aufweist und zum Zurückhalten des Substrates (6) dient, welches in das Volumen gefüllt wird, das vom Rahmen (1) begrenzt wird, wobei die Module mit Mitteln (11", 21, 44) zur Herstellung einer Verbindung mit der Wand (3) versehen sind, welche derart angeordnet sind, dass die Rahmen (1) in ihrer Hauptebene seitlich an der Wand (3) des Bauwerks anliegen und zu dieser parallel ausgerichtet sind, sodass der Bereich (2) der Module, aus welchem die Pflanzen (4) herauswachsen und welcher dem vorderen Bereich (2) ihres Rahmens (1) entspricht, im Wesentlichen parallel zur Wand (3) des Bauwerks ausgerichtet ist.

2. Modulare Struktur nach Anspruch 1, **dadurch gekennzeichnet, dass**:
das Modul durch Zusammenfügen mehrerer Elemente gebildet wird, unter anderem aus den stumpf aneinander gefügten Profilteilen (5, 40, 56), welche die Seiten des Rahmens (1) bilden und mit Mitteln (11) versehen sind, die zur Verbindung mindestens mit der Trennwand (12) und mit dem Rückhalteelement (8,9), welches kleine Öffnungen aufweist, dienen.

3. Modulare Struktur nach Anspruch 1, **dadurch gekennzeichnet, dass**:
das Modul einen einteiligen Kasten umfasst, der mindestens aus dem Rahmen (1) und der Trennwand (12) besteht, wobei der Kasten durch ein Formgebungsverfahren gebildet wird und mit Mitteln zur Verbindung mit dem Rückhalteelement (9) versehen ist.

4. Modulare Struktur nach einem beliebigen der vorhergehenden Ansprüche, **dadurch gekennzeichnet, dass**:
das Rückhalteelement hauptsächlich aus einem Maschenelement (9) besteht, das zusätzlich mit einer Textillage (8) in Verbindung steht, welche das Wurzelsystem der Pflanzen (4) schützt und zwischen dem Maschenelement (9) und dem Substrat (6) angeordnet ist.

5. Modulare Struktur nach einem beliebigen der vorhergehenden Ansprüche, **dadurch gekennzeichnet, dass**:
die Trennwand (12) mit mehreren steifen Elementen (51) versehen ist, welche das Innenvolumen des Rahmens (1) in einzelne Innenbereiche unterteilen.

6. Modulare Struktur nach Anspruch 5, **dadurch gekennzeichnet, dass**:
die Unterteilungselemente (51) nicht durchgehend sind und sich über einen Teil der Dicke des Rahmens (1) erstrecken, um einerseits Bereiche zum Zurückhalten der Bewässerungsflüssigkeit zu bilden und andererseits zuzulassen, dass die Feuchtigkeit das gesamte Volumen des Substrats (6) durchdringt.

7. Modulare Struktur nach einem beliebigen der vorhergehenden Ansprüche, **dadurch gekennzeichnet, dass**:
das Substrat (6) innerhalb des Rahmens (1) sowohl lose als auch in mindestens einem durchlässigen Behältnis (65) vorliegen kann.

8. Modulare Struktur nach einem beliebigen der vorhergehenden Ansprüche, **dadurch gekennzeichnet, dass**:
die Seiten des Rahmens (1) mit Mitteln (11') zur Aufnahme einer Schicht (23) zur Schall- und Wärmeisolierung versehen ist, wobei die Schicht hinter der Trennwand (12) angeordnet ist.

9. Modulare Struktur nach einem beliebigen der Ansprüche 1 und 8, **dadurch gekennzeichnet, dass**:
zwischen der Trennwand (12) und der Wand (3) des Bauwerks oder gegebenenfalls zwischen der Trennwand (12) und der Schicht (23) zur Schall- und Wärmeisolierung ein Belüftungsraum (24) vorgesehen ist.

10. Modulare Struktur nach einem beliebigen der vorhergehenden Ansprüche, **dadurch gekennzeichnet, dass**:
die Seiten des Rahmens (1) mit Mitteln zur Aufnahme einer Wandverkleidung (22) versehen sind, welche Bestandteil der Wand (3) des Bauwerks ist.

11. Modulare Struktur nach einem beliebigen der Ansprüche 8 bis 10, **dadurch gekennzeichnet, dass**:
die Mittel zur Aufnahme mindestens eines beliebigen Elements, das aus der Isolierschicht (23), der Wandverkleidung (22) und der Trennwand (12) gewählt ist, als Trägerelemente (7, 24'), welche zu einem Rahmen geformt sind und den Rahmen (1) zur Aufnahme des Substrats (6) verlängern und überlagern, und/oder als Lücken zur Aufnahme eines Steckelements (11, 11', 11"), welche im Rand des Rahmens (1) ausgespart sind, ausgebildet sein können.

12. Modulare Struktur nach einem beliebigen der vorhergehenden Ansprüche, **dadurch gekennzeichnet, dass**:
es sich bei den Mitteln zur Herstellung einer Verbindung zwischen den Modulen und der Wand (3) des Bauwerks um Mittel (21, 44) zur Befestigung der Rahmen (1) an der Wand (3) handelt.

13. Modulare Struktur nach einem beliebigen der vorhergehenden Ansprüche, **dadurch gekennzeichnet, dass**:
in mindestens einem beliebigen Seitenstück des Rahmens (1) ein technischer Schacht (25) vorgesehen ist.

14. Modulare Struktur nach einem beliebigen der vorhergehenden Ansprüche, **dadurch gekennzeichnet, dass**:
mindestens ein beliebiges Seitenstück des Rahmens (1) einen Freiraum (16, 47, 62) zur Aufnahme einer durchlässigen Leitung (19, 49) zur Bewässerung des Substrates (6) aufweist, wobei die Leitung mit dem System von Bewässerungsleitungen in Verbindung steht.

15. Modulare Struktur nach Anspruch 14, **dadurch gekennzeichnet, dass**:
der Freiraum (16, 47, 62) zur Aufnahme einer Bewässerungsleitung (16, 49) durch einen Hohlraum im Seitenstück des Rahmens (1) gebildet ist, wobei dieser mit Flüssigkeit gefüllt ist, um das Substrat über Bewässerungsöffnungen (18), die im gesamten Seitenstück des Rahmens (1) vorgesehen sind, zu bewässern, und/oder sich direkt zum Innenraum des Rahmens (1) hin öffnet.

16. Modulare Struktur nach einem beliebigen der vorhergehenden Ansprüche, **dadurch gekennzeichnet, dass**:
sie mit Mitteln (42, 52, 53, 64) versehen ist, die dazu bestimmt sind, die Bewässerungsflüssigkeit aufzufangen und zwecks einer Wiederverwendung dem Bewässerungssystem zuzuführen, wobei diese Auffangmittel am Boden der modularen Struktur angeordnet sind und/oder aus Auffangkanälen bestehen, die Teil eines Systems von Auffangleitungen sind.

17. Modulare Struktur nach einem beliebigen der Ansprüche 15 und 16, **dadurch gekennzeichnet, dass**:
die Bewässerungsleitungen (16, 49) mit einem beliebigen äußeren Kanal (27, 31, 39) des Systems von Bewässerungsleitungen sowie mit einer Bewässerungsleitung (16, 49) eines benachbarten Moduls verbunden sind.

18. Modulare Struktur nach einem beliebigen der Ansprüche 15 bis 17, **dadurch gekennzeichnet, dass**:
die Bewässerungsleitungen (16, 49) in unmittelbarer Nähe des vorderen Randes der Rahmen (1) angeordnet sind, um die Flüssigkeit in den vorderen Bereich des Substrats (6) zu befördern, damit die Restfeuchtigkeit des Substrats (6) so weit wie möglich von der Wand (3) entfernt ist und damit die Flüssigkeit das Substrat (6) in einem Bereich bewässert, der am stärksten zur Austrocknung neigt.

19. Modulare Struktur nach einem beliebigen der vorhergehenden Ansprüche, **dadurch gekennzeichnet, dass**:
die Quelle zur Versorgung mit der Flüssigkeit eine Quelle (26) zur Versorgung mit Wasser sowie eine Quelle zur Versorgung mit einer Behandlungsflüssigkeit umfasst, wobei letztere mit der Wasserversorgungsquelle (26) in Verbindung steht, sowie mindestens einen Vorratsbehälter (32, 33) für Mittel zur Behandlung der Pflanzen (4), wobei das System von Bewässerungsleitungen Mittel (37, 28) zur Beförderung des Wassers und der Behandlungsflüssigkeit in jeweils einen Hauptbewässerungskanal (27, 31) sowie Mittel (35, 36) zur Dosierung der jeweiligen Mengen an Wasser, an Behandlungsflüssigkeit und an Behandlungsmitteln, die in letzterer enthalten sind, umfasst, wobei deren Einsatz der Steuerung durch Programmierungsmittel (29) unterliegt.

20. Modulare Struktur nach den Ansprüchen 16 und 19, **dadurch gekennzeichnet, dass**:
die Quelle zur Versorgung mit Flüssigkeit darüber hinaus ein System von Auffangleitungen umfasst, welche der Rückgewinnung der überschüssigen Bewässerungsmittel dient und mit den Dosiermitteln (35, 36) in Verbindung steht.

21. Modulare Struktur nach Anspruch 19, **dadurch gekennzeichnet, dass**:
die Programmierungsmittel (29) Mittel (38) zur Speicherung einer jeweils abzugebenden Menge an Behandlungsmitteln, Mittel (30) zur zeitlichen Steuerung sowie Mittel (30') zur Steuerung umfassen, wobei letztere Sensoren für die Feuchtigkeit des Substrats umfassen.

22. modulare Struktur nach einem beliebigen der vorhergehenden Ansprüche, **dadurch gekennzeichnet, dass**:
die Mittel zur Verbindung zweier benachbarter Module Dichtungen (55) umfassen, die zwischen zwei benachbarten Modulen angeordnet sind, sowie vorderseitige Verkleidungsplatten (54), die den Verbindungsbereich zwischen zwei benachbarten Modulen verdecken.
